# EUROPEAN PATENT APPLICATION

(11) **EP 4 219 053 A1**
(43) Date of publication of application: **02.08.2023**
(21) Application number: 21889149.7
(22) Date of filing: 01.11.2021
(51) Int. Cl.: B23H 7/02

(54) **WIRE ELECTRICAL DISCHARGE MACHINING APPARATUS AND CONTROL METHOD FOR WIRE ELECTRICAL DISCHARGE MACHINING APPARATUS**

(30) Priority: 06.11.2020 JP 2020185840
(71) Applicant: FANUC CORPORATION, Oshino-mura Minamitsuru-gun Yamanashi 401-0597 (JP)
(72) Inventor: FUNAKUBO, Ryuuki, Yamanashi 401-0597 (JP); NISHIKAWA, Ryo, Yamanashi 401-0597 (JP)
(74) Representative: Keil & Schaafhausen Patentanwälte PartGmbB
(86) International application number: PCT/JP2021/040190
(87) International publication number: WO 2022/097596

(57) **Abstract**

A wire electrical discharge machining apparatus (10) comprises: a servo controller (38) that controls the relative speed of a wire electrode (12) in relation to a workpiece (14), in accordance with a machining parameter; a machining electrical current control unit (36) that controls the electrical discharge energy produced between poles; an electrical discharge determination unit (28) that determines whether electrical discharge has occurred between the poles within a unit time; and a machining parameter setting unit (32) that sets a machining parameter, which is for during the approach to a machining end surface (40), to a first parameter, and sets the machining parameter to a second parameter when the number of times that electrical discharge has been determined to have occurred has reached a prescribed number of times.

## Description

### TECHNICAL FIELD

The present invention relates to a wire electrical discharge machine (wire electrical discharge machining apparatus), and a control method for a wire electrical discharge machine.

### BACKGROUND ART

In JP 2001-113419 A, it is disclosed that, in the case that a wire electrical discharge machine is machining a portion where it is easy for the wire electrode to become broken or disconnected, a variation in a time interval between occurrences of electric discharge increases. The portion where it is easy for the wire electrode to become broken or disconnected includes a portion such as a bent portion, a stepped portion, and an end face portion of the object to be machined. Therefore, in the wire electrical discharge machine disclosed in JP 2001-113419 A, in the case that a variance value indicative of a variation in the time interval at which the electric discharges occur is greater than a set value, the machining condition is changed in a manner so as to suppress the disconnection or breakage of the wire electrode.

### SUMMARY OF THE INVENTION

In the case that the wire electrode is approaching a machining end surface of the workpiece, an electric discharge may occur sporadically, even in the case that the wire electrode is separated away from the machining end surface. Therefore, the variance value of the time interval between the occurrences of the electric discharge becomes greater than the set value. In this case, according to the technique disclosed in JP 2001-113419 A, the machining condition is changed in a manner so as to suppress the disconnection or breakage of the wire electrode, even in the case that the wire electrode is separated away from the machining end surface. However, in the case that the wire electrode is separated away from the machining end surface, disconnection or breakage of the wire electrode is unlikely to occur. Therefore, in the technique disclosed in JP 2001-113419 A, the machining condition cannot be appropriately set.

The present invention has been devised with the aim of solving the aforementioned problems, and has the object of providing a wire electrical discharge machine and a control method for a wire electrical discharge machine, which are capable of setting a machining condition more appropriately in the case that the wire electrode is approaching a machining end surface of the object to be machined.

A first aspect of the present invention is characterized by a wire electrical discharge machine configured to perform electrical discharge machining on a workpiece by applying a voltage to an inter-electrode gap between a wire electrode and the workpiece and thereby generating an electric discharge while causing the wire electrode to be moved with respect to the workpiece, the wire electrical discharge machine including a control unit configured to control, in accordance with a machining condition, a relative speed of the wire electrode with respect to the workpiece, and an electric discharge energy generated in the inter-electrode gap, a voltage detection unit configured to detect a voltage in the inter-electrode gap, an electric discharge determination unit configured to, in a case that the wire electrode is approaching a machining end surface of the workpiece in order to machine the workpiece, determine, for each unit time period, whether or not the electric discharge has occurred in the inter-electrode gap within the unit time period, based on the voltage in the inter-electrode gap that has been detected, a counting unit configured to count a number of times that it is determined that the electric discharge has occurred, and a machining condition setting unit configured to set the machining condition to a first condition in the case that the wire electrode is approaching the machining end surface, and to set the machining condition to a second condition that differs from the first condition, in a case that the counted number of times has reached a predetermined number of times.

A second aspect of the present invention is characterized by a control method for a wire electrical discharge machine configured to perform electrical discharge machining on a workpiece by applying a voltage to an inter-electrode gap between a wire electrode and the workpiece and thereby generating an electric discharge while causing the wire electrode to be moved with respect to the workpiece, wherein the wire electrical discharge machine includes a voltage detection unit configured to detect a voltage in the inter-electrode gap, the control method for the wire electrical discharge machine including a first machining condition setting step of setting a machining condition to a first condition in a case that the wire electrode is approaching a machining end surface of the workpiece in order to machine the workpiece, a first control step of controlling, in accordance with the first condition, a relative speed of the wire electrode with respect to the workpiece, and an electric discharge energy generated in the inter-electrode gap, an electric discharge determination step of, in the case that the wire electrode is approaching the machining end surface, determining, for each unit time period, whether or not the electric discharge has occurred in the inter-electrode gap within the unit time period, based on the voltage in the inter-electrode gap that has been detected, a counting step of counting a number of times that it is determined that an electric discharge has occurred, a second machining condition setting step of setting the machining condition to a second condition that differs from the first condition, in a case that the counted number of times has reached a predetermined number of times, and a second control step of controlling, in accordance with the second condition, the relative speed of the wire electrode with respect to the workpiece, and the electric discharge energy generated in the inter-electrode gap.

According to the present invention, the machining condition of the wire electrical discharge machine can be set more appropriately.

### BRIEF DESCRIPTION OF DRAWINGS

FIG. 1 is a configuration diagram of a wire electrical discharge machine;
FIG. 2 is a flowchart showing a process flow of an approach process performed in a control device;
FIG. 3 is a schematic diagram showing how a wire electrode approaches a machining end surface of a workpiece until machining of the workpiece is started;
FIG. 4 is a schematic diagram showing a state of a workpiece in which a core thereof is left uncut;
FIG. 5 is a schematic diagram showing how a wire electrode approaches a machining end surface of a workpiece until machining of the workpiece is started;
FIG. 6 is a flowchart showing a process flow of an approach process performed in the control device; and
FIG. 7 is a flowchart showing a process flow of an approach process performed in the control device.

### DETAILED DESCRIPTION OF THE INVENTION

### [First Embodiment]

### [Wire Electrical Discharge Machine]

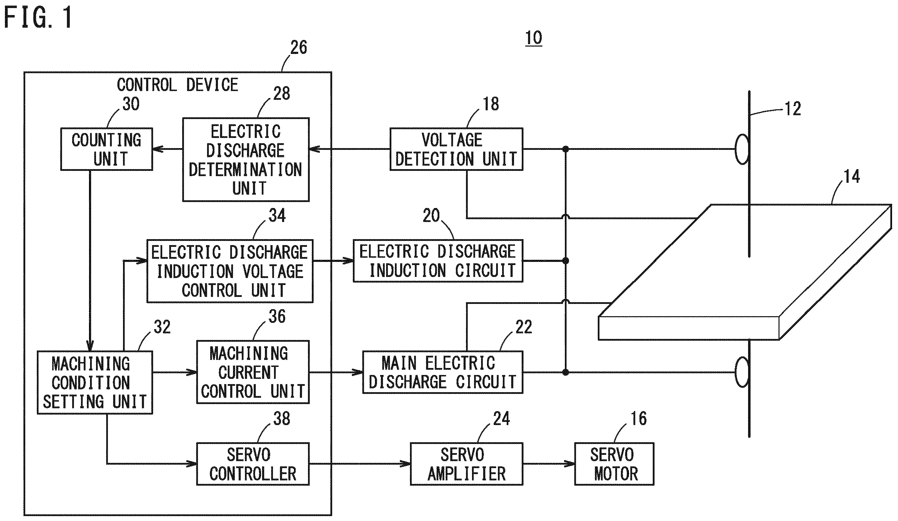

FIG. 1 is a configuration diagram of a wire electrical discharge machine 10. The wire electrical discharge machine 10 carries out machining by generating an electric discharge in an inter-electrode gap between a wire electrode 12 and a workpiece (object to be machined) 14 while the wire electrode 12 is made to move relatively with respect to the workpiece 14. The workpiece 14 is placed on a non-illustrated work table. By a servo motor 16 moving the work table in an X-axis direction and a Y-axis direction, the wire electrode 12 moves relatively with respect to the workpiece 14.

The wire electrical discharge machine 10, in addition to the servo motor 16, includes a voltage detection unit 18, an electric discharge induction circuit 20, a main electric discharge circuit 22, a servo amplifier 24, and a control device 26.

The voltage detection unit 18 detects a voltage in the inter-electrode gap (hereinafter, also referred to as an inter-electrode voltage). The electric discharge induction circuit 20 applies an electric discharge induction voltage to the inter-electrode gap, to thereby generate an electric discharge in the inter-electrode gap. After the electric discharge has been generated in the inter-electrode gap, the main electric discharge circuit 22 supplies a machining current to the wire electrode 12 as an electric discharge energy for machining the workpiece 14. The servo amplifier 24 supplies the driving electrical power to the servo motor 16, and thereby causes the servo motor 16 to be driven.

The control device 26 includes an electric discharge determination unit 28, a counting unit 30, a machining condition setting unit 32, an electric discharge induction voltage control unit 34, a machining current control unit 36, and a servo controller 38.

The electric discharge determination unit 28 determines whether or not an electric discharge has occurred in the inter-electrode gap within a unit time period. The determination as to whether or not the electric discharge has occurred in the inter-electrode gap is carried out on the basis of the inter-electrode voltage. Such a determination is repeated for each unit time period. The counting unit 30 counts the number of times that the electric discharge determination unit 28 determines that an electric discharge has occurred in the inter-electrode gap.

The machining condition setting unit 32 sets the machining condition according to the number of times that have been counted by the counting unit 30. The machining condition is a condition concerning each of a machining current supplied from the main electric discharge circuit 22 to the wire electrode 12, a relative speed of the wire electrode 12 with respect to the workpiece 14, an electric discharge induction voltage applied in the inter-electrode gap by the electric discharge induction circuit 20, and a cycle in which the electric discharge induction voltage is applied.

The magnitude of the machining current supplied from the main electric discharge circuit 22 to the wire electrode 12 correlates with the magnitude of the electric discharge energy generated in the inter-electrode gap. Therefore, setting of the machining current supplied from the main electric discharge circuit 22 to the wire electrode 12 can also be referred to as setting the electric discharge energy generated in the inter-electrode gap. Further, in the wire electrical discharge machine 10 according to the present embodiment, the wire electrode 12 moves relatively with respect to the workpiece 14 by moving the workpiece 14 that has been placed on the work table together with the work table. Therefore, the relative speed of the wire electrode 12 with respect to the workpiece 14 can also be referred to as a movement speed of the work table.

The electric discharge induction voltage control unit 34 outputs to the electric discharge induction circuit 20 a command value on the basis of the machining condition set in the machining condition setting unit 32. Based on the command value, the electric discharge induction circuit 20 applies the electric discharge induction voltage to the inter-electrode gap. Consequently, in the cycle that is set in the machining condition setting unit 32, the electric discharge induction voltage set in the machining condition setting unit 32 is applied in the inter-electrode gap.

The machining current control unit 36 outputs to the main electric discharge circuit 22 a command value based on the machining condition set in the machining condition setting unit 32. Based on the command value, the main electric discharge circuit 22 supplies the machining current to the inter-electrode gap. Consequently, the machining current set in the machining condition setting unit 32 is supplied to the inter-electrode gap. The machining current control unit 36 corresponds to the control unit of the present invention.

The servo controller 38 outputs a command value to the servo amplifier 24 on the basis of the machining condition set in the machining condition setting unit 32. Based on the command value, the servo amplifier 24 supplies a driving electrical power to the servo motor 16. Consequently, the wire electrode 12 moves with respect to the workpiece 14 at the relative speed set in the machining condition setting unit 32. The servo controller 38 corresponds to the control unit of the present invention.

The control device 26 includes a computer equipped with an arithmetic processing unit and a storage, neither of which are shown. The arithmetic processing unit includes, for example, a processor such as a central processing unit (CPU), a microprocessing unit (MPU) or the like, and a memory such as a ROM and a RAM or the like. The storage, for example, is a hard disk, a solid state drive (SSD), or the like. The electric discharge determination unit 28, the counting unit 30, the machining condition setting unit 32, the electric discharge induction voltage control unit 34, the machining current control unit 36, and the servo controller 38 are realized by a program that is stored in the storage being executed by the arithmetic processing unit.

### [Approach Process]

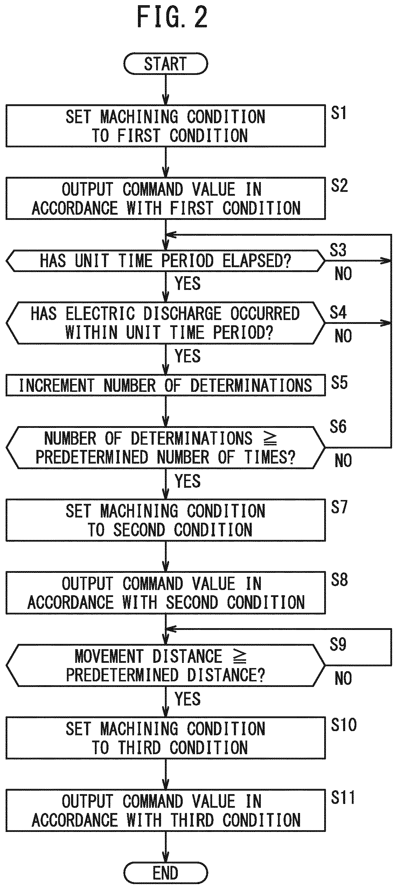

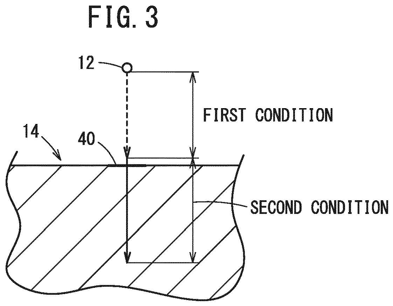

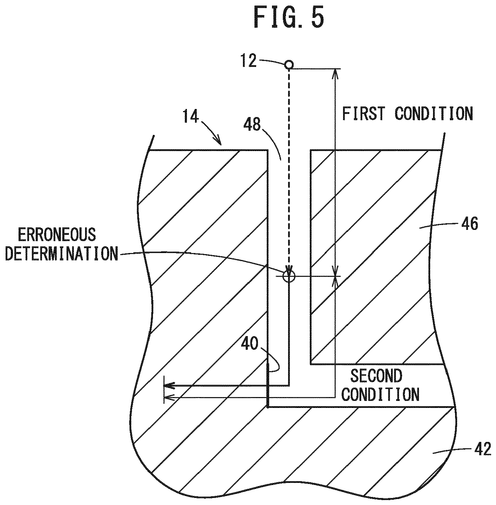

FIG. 2 is a flowchart showing a process flow of an approach process performed in the control device 26. The approach process is executed each time that the wire electrode 12 approaches a machining end surface 40 of the workpiece 14 (refer to FIGS. 3 and 5). The machining end surface 40 means a surface of the workpiece 14 that the wire electrode 12 moves toward (approaches) at a time when the machining of the workpiece 14 is started.

In step S1, the machining condition setting unit 32 sets the machining condition to a first condition. Thereafter, the process transitions to step S2. The first condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

In step S2, based on the first condition, the electric discharge induction voltage control unit 34 outputs a command value to the electric discharge induction circuit 20. In the cycle defined in the first condition, the electric discharge induction circuit 20 applies the electric discharge induction voltage of the first condition in the inter-electrode gap. Further, the machining current control unit 36 outputs a command value based on the first condition, to the main electric discharge circuit 22. The main electric discharge circuit 22 supplies the machining current of the first condition, to the wire electrode 12. Further, the servo controller 38 outputs a command value based on the first condition, to the servo amplifier 24. Based on the command value, the servo amplifier 24 supplies the driving electrical power to the servo motor 16. Consequently, the wire electrode 12 moves relative to the workpiece 14 at the relative speed of the first condition. Thereafter, the process transitions to step S3. The process of step S2 is continuously executed until the process of step S8, which will be described later, is carried out.

In step S3, the electric discharge determination unit 28 determines whether or not the unit time period has elapsed. In the case that the unit time period has elapsed, the process transitions to step S4, whereas in the case that the unit time period has not elapsed, the process of step S3 is repeated. The determination as to whether or not the unit time period has elapsed is carried out on the basis of the elapsed time period, taking as a reference point whichever one is later of the point in time when the approach process was started, and the point in time when it was previously determined in step S3 that the unit time period had elapsed.

In step S4, the electric discharge determination unit 28 determines whether or not an electric discharge has occurred in the inter-electrode gap within the unit time period. In the case that the electric discharge has occurred, the process transitions to step S5, whereas in the case that the electric discharge is not occurring, the process returns to step S3. The determination as to whether or not the electric discharge has occurred in the inter-electrode gap within the unit time period is carried out, for example, on the basis of an average value of the inter-electrode voltage within the unit time period. In the case that the average value of the inter-electrode voltage within the unit time period is less than or equal to a predetermined voltage, a determination is made that the electric discharge has occurred in the inter-electrode gap within the unit time period.

In step S5, the counting unit 30 increments the number of times (hereinafter, referred to as the number of determinations) that it is determined that the electric discharge has occurred in the inter-electrode gap within the unit time period. Thereafter, the process transitions to step S6. The number of determinations is counted as one time, regardless of whether the number of times that the electric discharge has occurred in the inter-electrode gap within the unit time period is one time or a plurality of times.

In step S6, the machining condition setting unit 32 determines whether or not the number of determinations is greater than or equal to a predetermined number of times. In the case that the number of determinations is greater than or equal to the predetermined number of times, the process transitions to step S7, whereas in the case that the number of determinations is less than the predetermined number of times, the process returns to step S3.

In step S7, the machining condition setting unit 32 sets the machining condition to a second condition. Thereafter, the process transitions to step S8. The second condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

Concerning the relative speed of the wire electrode 12 with respect to the workpiece 14, in the second condition, the relative speed is set to a speed that is slower than that in the first condition. Concerning the machining current supplied to the wire electrode 12, in the second condition, the machining current may be the same as that in the first condition, or in the second condition, the machining current may be different from that in the first condition. Concerning the electric discharge induction voltage applied in the inter-electrode gap, in the second condition, the electric discharge induction voltage may be the same as that in the first condition, or in the second condition, the electric discharge induction voltage may be different from that in the first condition. Concerning the cycle in which the electric discharge induction voltage is applied, in the second condition, the cycle may be the same as that in the first condition, or in the second condition, the cycle may be different from that in the first condition.

In step S8, based on the second condition, the electric discharge induction voltage control unit 34 outputs a command value to the electric discharge induction circuit 20. In the cycle defined in the second condition, the electric discharge induction circuit 20 applies the electric discharge induction voltage of the second condition in the inter-electrode gap. Further, the machining current control unit 36 outputs a command value based on the second condition to the main electric discharge circuit 22. The main electric discharge circuit 22 supplies the machining current of the second condition to the wire electrode 12. Further, the servo controller 38 outputs a command value based on the second condition to the servo amplifier 24. Based on the command value, the servo amplifier 24 supplies the driving electrical power to the servo motor 16. Consequently, the wire electrode 12 moves with respect to the workpiece 14 at the relative speed of the second condition. Thereafter, the process transitions to step S9. The process of step S8 is continuously executed until the process of step S11, which will be described later, is carried out.

In step S9, the machining condition setting unit 32 determines whether or not the movement distance of the wire electrode 12 with respect to the workpiece 14 is greater than or equal to a predetermined distance. The movement distance of the wire electrode 12 is measured with the position of the wire electrode 12 at the point in time when the machining condition has been switched from the first condition to the second condition in step S7 being treated as a reference point. In the case that the movement distance of the wire electrode 12 is greater than or equal to the predetermined distance, the process transitions to step S10, whereas in the case that the movement distance of the wire electrode 12 is less than the predetermined distance, the process of step S9 is repeated.

In step S10, the machining condition setting unit 32 sets the machining condition to a third condition. Thereafter, the process transitions to step S11. The third condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

Concerning the relative speed of the wire electrode 12 with respect to the workpiece 14, in the third condition, the relative speed is set to a speed that is faster than that in the second condition. Furthermore, concerning the machining current supplied to the wire electrode 12, in the third condition, the machining current is set to a current that is greater than that in the second condition. Concerning the electric discharge induction voltage applied in the inter-electrode gap, in the third condition, the electric discharge induction voltage may be the same as that in the second condition, or in the third condition, the electric discharge induction voltage may be different from that in the second condition. Concerning the cycle in which the electric discharge induction voltage is applied, in the third condition, the cycle may be the same as that in the second condition, or in the third condition, the cycle may be different from that in the second condition.

Concerning the relative speed of the wire electrode 12 with respect to the workpiece 14, in the case that the third condition is set to a faster speed than in the second condition, then concerning the machining current supplied to the wire electrode 12, in the third condition, the machining current may be set to a current of the same magnitude as that in the second condition. Concerning the machining current supplied to the wire electrode 12, in the case that the third condition is set to a current that is greater than that in the second condition, then concerning the relative speed of the wire electrode 12 with respect to the workpiece 14, in the third condition, the relative speed may be set to the same speed as that in the second condition.

In step S11, based on the third condition, the electric discharge induction voltage control unit 34 outputs a command value to the electric discharge induction circuit 20. In the cycle defined in the third condition, the electric discharge induction circuit 20 applies the electric discharge induction voltage of the third condition in the inter-electrode gap. Further, the machining current control unit 36 outputs a command value based on the third condition to the main electric discharge circuit 22. The main electric discharge circuit 22 supplies the machining current of the third condition to the wire electrode 12. Further, the servo controller 38 outputs a command value based on the third condition to the servo amplifier 24. Based on the command value, the servo amplifier 24 supplies the driving electrical power to the servo motor 16. Consequently, the wire electrode 12 moves with respect to the workpiece 14 at the relative speed of the third condition. Thereafter, the approach process is brought to an end. After the approach process is completed, the workpiece 14 is subjected to electrical discharge machining in accordance with the machining program. Even after the approach process is completed, the process of step S11 is continuously executed until the machining condition is changed.

### [Operations and Effects]

FIG. 3 is a schematic diagram showing how the wire electrode 12 approaches the machining end surface 40 of the workpiece 14, and the wire electrode 12 enters into the interior of the workpiece 14 from the machining end surface 40 while electrical discharge machining is carried out.

In the wire electrical discharge machine 10 according to the present embodiment, in the case that the wire electrode 12 is approaching the machining end surface 40, the machining condition setting unit 32 sets the machining condition to the first condition. In the case that the machining condition is set to the first condition, the relative speed of the wire electrode 12 becomes faster. Consequently, the time period until the wire electrode 12 reaches the machining end surface 40 can be shortened. As a result, the time period from when the wire electrode 12 starts to approach the machining end surface 40 until the machining of the workpiece 14 is completed (hereinafter, also referred to as a machining time period) can be made shorter. In the case that the wire electrode 12 has come into close proximity to the machining end surface 40, the wire electrical discharge machine 10 switches the machining condition from the first condition to the second condition. The relative speed of the wire electrode 12 in the case that the machining condition is set to the second condition is slower than the relative speed of the wire electrode 12 in the case that the machining condition is set to the first condition. Consequently, it is possible to suppress the disconnection or breakage of the wire electrode 12 at the time when the wire electrode 12 enters into the interior of the workpiece 14 from the machining end surface 40.

In order to realize both the shortening of the machining time period and to prevent the wire electrode 12 from becoming disconnected or broken, in the case that the wire electrode 12 has come into close proximity to the machining end surface 40, it is necessary to switch the machining condition from the first condition to the second condition. If the machining condition is switched from the first condition to the second condition in a state where the wire electrode 12 is separated away from the machining end surface 40, the machining time period cannot be sufficiently shortened. Further, if the machining condition is switched from the first condition to the second condition after the wire electrode 12 has entered into the interior of the workpiece 14, disconnection or breakage of the wire electrode 12 frequently occurs at the time when the wire electrode 12 enters into the interior of the workpiece 14.

When the wire electrode 12 comes into close proximity to the machining end surface 40, the electric discharge occurs in the inter-electrode gap. Therefore, by monitoring the presence or absence of the electric discharge in the inter-electrode gap, it is possible to determine whether or not the wire electrode 12 has come into close proximity to the machining end surface 40. However, an erroneous determination may be made simply based on the presence or absence of the electric discharge in the inter-electrode gap.

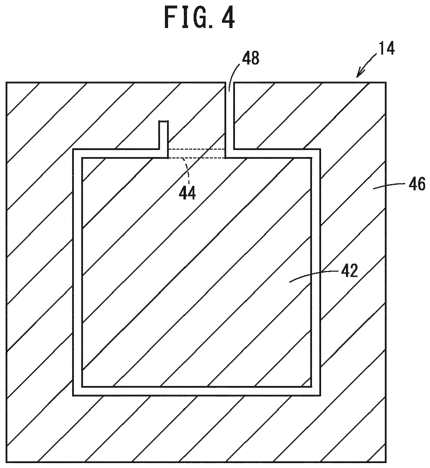

FIG. 4 is a schematic diagram showing a state of the workpiece 14 in which a punch (core) 42 thereof is left uncut. Machining while leaving a portion uncut is carried out with respect to the workpiece 14, and a punch 42 and a die 46 remain connected at an uncut portion 44 which is indicated by the dotted line in FIG. 4. FIG. 5 is a schematic diagram showing how the wire electrode 12 approaches the machining end surface 40 of the workpiece 14, and the wire electrode 12 enters into the interior of the workpiece 14 from the machining end surface 40 while electrical discharge machining is carried out.

In order to separate the punch 42 away from the die 46, as shown in FIG. 5, it is necessary that the wire electrode 12 approach the machining end surface 40 through a machining groove 48 which has already been machined. In this case, since the workpiece 14 is in close proximity to the wire electrode 12 on both sides of the machining groove 48, a situation may take place in which an electric discharge occurs in the inter-electrode gap. In such a case, regardless of the fact that the wire electrode 12 is separated away from the machining end surface 40, it is easy for an erroneous determination to be made that the wire electrode 12 has come into close proximity to the machining end surface 40. If such an erroneous determination is made, the machining condition is switched from the first condition to the second condition at the position where the wire electrode 12 is separated away from the machining end surface 40. In the case that the machining condition is the second condition, the relative speed of the wire electrode 12 with respect to the workpiece 14 is slower than in the case in which the machining condition is the first condition. Therefore, the time period until the wire electrode 12 reaches the machining end surface 40 becomes longer, and there is a concern that the machining time period may become longer.

In the case that the wire electrode 12 is currently passing through the machining groove 48, even if an electric discharge has occurred in the inter-electrode gap, the electric discharge occurs sporadically and the electric discharge is not generated consecutively. On the other hand, in the case that the wire electrode 12 has come into close proximity to the machining end surface 40, the electric discharge occurs consecutively.

The wire electrical discharge machine 10 according to the present embodiment determines, for each unit time period, whether or not an electric discharge has occurred in the inter-electrode gap within the unit time period. Regardless of whether the number of times the electric discharge has occurred in the inter-electrode gap within the unit time period is one time or a plurality of times, the number of times (the number of determinations) that it is determined that the electric discharge has occurred in the inter-electrode gap within the unit time period is counted as one time. In the case that the electric discharge occurs sporadically, the number of determinations is small. On the other hand, in the case that the electric discharge occurs consecutively, the number of determinations increases.

In the wire electrical discharge machine 10 according to the present embodiment, the number of times (the number of determinations) that the machining condition setting unit 32 has determined that the electric discharge has occurred in the inter-electrode gap within the unit time period is used as a determination criterion for switching the machining condition from the first condition to the second condition. Consequently, the timing at which the machining condition is switched from the first condition to the second condition can be set to a point in time at which the wire electrode 12 has come into close proximity to the machining end surface 40. In accordance with this feature, under the first condition in which the relative speed of the wire electrode 12 with respect to the workpiece 14 is higher than that in the second condition, the wire electrode 12 can be made to move relatively with respect to the workpiece 14 until the wire electrode 12 comes into close proximity to the machining end surface 40. Therefore, the time period required until the wire electrode 12 reaches the machining end surface 40 can be shortened, and the machining time period can also be shortened.

At the start of electrical discharge machining, as well as immediately after the start of electrical discharge machining, the number of times of the electric discharge in the inter-electrode gap increases rapidly in comparison with a situation prior to when the electrical discharge machining is started. The start of electrical discharge machining indicates a point in time when the surface of the machining end surface 40 is removed due to the electric discharge having taken place between the wire electrode 12 and the machining end surface 40. At the start of electrical discharge machining, as well as immediately after the start of electrical discharge machining, the load imposed on the wire electrode 12 becomes greater in comparison with a situation prior to when the electrical discharge machining is started, and it becomes easy for the wire electrode 12 to become broken or disconnected. In this case, the wire electrical discharge machine 10 according to the present embodiment sets the relative speed of the wire electrode 12 with respect to the workpiece 14 to the second condition. By setting the relative speed to the second condition, the relative speed of the wire electrode 12 with respect to the workpiece 14 becomes slower in comparison with the case in which the relative speed is set to the first condition. Consequently, at the start of electrical discharge machining and immediately after the start of electrical discharge machining, it is possible to suppress the disconnection or breakage of the wire electrode 12 at the time when the wire electrode 12 enters into the interior of the workpiece 14 from the machining end surface 40.

Furthermore, according to the present embodiment, in the machining condition setting unit 32, after having switched the machining condition from the first condition to the second condition, in the case that the movement distance of the wire electrode 12 with respect to the workpiece 14 reaches the predetermined distance, the machining condition is switched from the second condition to the third condition.

When a short time period has passed from when the electrical discharge machining was started, a variation in the number of times of the electric discharge in the inter-electrode gap stabilizes, and the load on the wire electrode 12 decreases. In this case, the wire electrical discharge machine 10 according to the present embodiment sets the machining current supplied to the wire electrode 12 to the third condition. By setting the machining current to the third condition, the electric discharge energy in the inter-electrode gap becomes higher in comparison with the case in which the machining current is set to the second condition. Furthermore, the wire electrical discharge machine 10 according to the present embodiment sets the relative speed of the wire electrode 12 with respect to the workpiece 14 to the third condition. By setting the relative speed to the third condition, the relative speed of the wire electrode 12 with respect to the workpiece 14 becomes faster in comparison with the case in which the relative speed is set to the second condition. Consequently, the machining speed of the workpiece 14 can be made to increase, and the machining time period of the workpiece 14 can be shortened.

### [Second Embodiment]

The configuration of the wire electrical discharge machine 10 according to the second embodiment is the same as that of the wire electrical discharge machine 10 according to the first embodiment. However, the contents of the approach process performed in the control device 26 according to the second embodiment differ partially from the contents of the approach process according to the first embodiment.

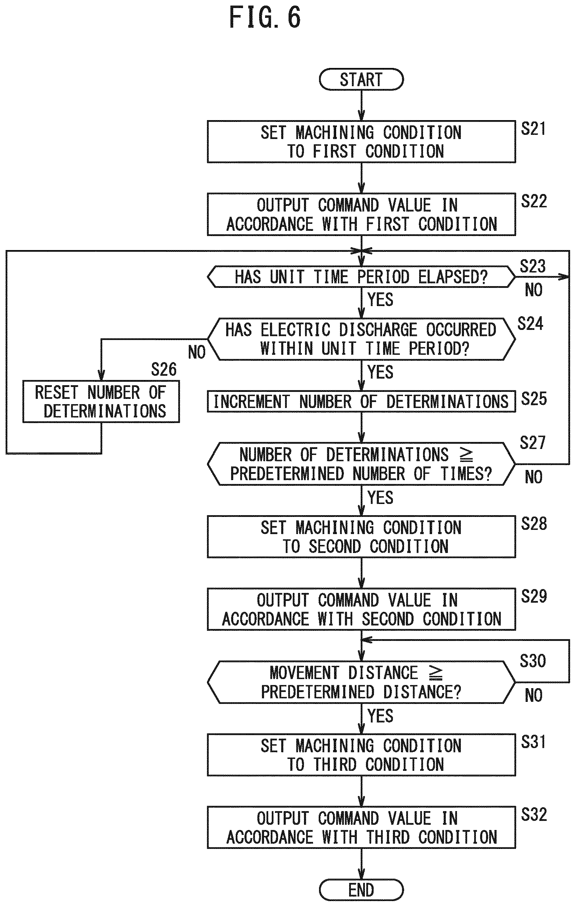

FIG. 6 is a flowchart showing a process flow of an approach process performed in the control device 26. The approach process is executed each time that the wire electrode 12 approaches the machining end surface 40 of the workpiece 14.

In step S21, the machining condition setting unit 32 sets the machining condition to the first condition. Thereafter, the process transitions to step S22. The first condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

In step S22, based on the first condition, the electric discharge induction voltage control unit 34 outputs a command value to the electric discharge induction circuit 20. In the cycle defined in the first condition, the electric discharge induction circuit 20 applies the electric discharge induction voltage of the first condition in the inter-electrode gap. Further, the machining current control unit 36 outputs a command value based on the first condition to the main electric discharge circuit 22. The main electric discharge circuit 22 supplies the machining current of the first condition to the wire electrode 12. Further, the servo controller 38 outputs a command value based on the first condition to the servo amplifier 24. Based on the command value, the servo amplifier 24 supplies the driving electrical power to the servo motor 16. Consequently, the wire electrode 12 moves with respect to the workpiece 14 at the relative speed of the first condition. Thereafter, the process transitions to step S23. The process of step S22 is continuously executed until the process of step S29, which will be described later, is carried out.

In step S23, the electric discharge determination unit 28 determines whether or not the unit time period has elapsed. In the case that the unit time period has elapsed, the process transitions to step S24, whereas in the case that the unit time period has not elapsed, the process of step S23 is repeated. The determination as to whether or not the unit time period has elapsed is carried out on the basis of the elapsed time period, taking as a reference point whichever one is later of the point in time when the approach process was started, and the point in time when it was previously determined that the unit time period had elapsed in step S23.

In step S24, the electric discharge determination unit 28 determines whether or not an electric discharge has occurred in the inter-electrode gap within the unit time period. In the case that the electric discharge has occurred, the process transitions to step S25, whereas in the case that the electric discharge is not occurring, the process transitions to step S26. Whether or not the electric discharge has occurred in the inter-electrode gap within the unit time period can be determined, for example, on the basis of an average value of the inter-electrode voltage within the unit time period. In the case that the average value of the inter-electrode voltage within the unit time period is less than or equal to a predetermined voltage, a determination is made that the electric discharge has occurred in the inter-electrode gap within the unit time period.

In step S25, the counting unit 30 increments the number of times (hereinafter, referred to as the number of determinations) that it is determined that the electric discharge has occurred in the inter-electrode gap within the unit time period. Thereafter, the process transitions to step S27. The number of determinations is counted as one time, regardless of whether the number of times that the electric discharge has occurred in the inter-electrode gap within the unit time period is one time or a plurality of times.

In step S26, the counting unit 30 resets the number of determinations. Thereafter, the process returns to step S23.

In step S27, the machining condition setting unit 32 determines whether or not the number of determinations is greater than or equal to a predetermined number of times. In the case that the number of determinations is greater than or equal to the predetermined number of times, the process transitions to step S28, whereas in the case that the number of determinations is less than the predetermined number of times, the process returns to step S23.

In step S28, the machining condition setting unit 32 sets the machining condition to the second condition. Thereafter, the process transitions to step S29. The second condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

Concerning the relative speed of the wire electrode 12 with respect to the workpiece 14, in the second condition, the relative speed is set to a speed that is slower than that in the first condition. Concerning the machining current supplied to the wire electrode 12, in the second condition, the machining current may be the same as that in the first condition, or in the second condition, the machining current may be different from that in the first condition. Concerning the electric discharge induction voltage applied in the inter-electrode gap, in the second condition, the electric discharge induction voltage may be the same as that in the first condition, or in the second condition, the electric discharge induction voltage may be different from that in the first condition. Concerning the cycle in which the electric discharge induction voltage is applied, in the second condition, the cycle may be the same as that in the first condition, or in the second condition, the cycle may be different from that in the first condition.

In step S29, based on the second condition, the electric discharge induction voltage control unit 34 outputs a command value to the electric discharge induction circuit 20. In the cycle defined in the second condition, the electric discharge induction circuit 20 applies the electric discharge induction voltage of the second condition in the inter-electrode gap. Further, the machining current control unit 36 outputs a command value based on the second condition to the main electric discharge circuit 22. The main electric discharge circuit 22 supplies the machining current of the second condition to the wire electrode 12. Further, the servo controller 38 outputs a command value based on the second condition to the servo amplifier 24. Based on the command value, the servo amplifier 24 supplies the driving electrical power to the servo motor 16. Consequently, the wire electrode 12 moves with respect to the workpiece 14 at the relative speed of the second condition. Thereafter, the process transitions to step S30. The process of step S29 is continuously executed until the process of step S32, which will be described later, is carried out.

In step S30, the machining condition setting unit 32 determines whether or not the movement distance of the wire electrode 12 with respect to the workpiece 14 is greater than or equal to a predetermined distance. The movement distance of the wire electrode 12 is measured with the position of the wire electrode 12 at the point in time when the machining condition is switched from the first condition to the second condition in step S28 being treated as a reference point. In the case that the movement distance of the wire electrode 12 is greater than or equal to the predetermined distance, the process transitions to step S31, whereas in the case that the movement distance of the wire electrode 12 is less than the predetermined distance, the process of step S30 is repeated.

In step S31, the machining condition setting unit 32 sets the machining condition to a third condition. Thereafter, the process transitions to step S32. The third condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

Concerning the relative speed of the wire electrode 12 with respect to the workpiece 14, in the third condition, the relative speed is set to a speed that is faster than that in the second condition. Furthermore, concerning the machining current supplied to the wire electrode 12, in the third condition, the machining current is set to a current that is greater than that in the second condition. Concerning the electric discharge induction voltage applied in the inter-electrode gap, in the third condition, the electric discharge induction voltage may be the same as that in the second condition, or in the third condition, the electric discharge induction voltage may be different from that in the second condition. Concerning the cycle in which the electric discharge induction voltage is applied, in the third condition, the cycle may be the same as that in the second condition, or in the third condition, the cycle may be different from that in the second condition.

Concerning the relative speed of the wire electrode 12 with respect to the workpiece 14, in the case that the third condition is set to a faster speed than in the second condition, then concerning the machining current supplied to the wire electrode 12, in the third condition, the machining current may be set to a current of the same magnitude as that in the second condition. Concerning the machining current supplied to the wire electrode 12, in the case that the third condition is set to a current that is greater than that in the second condition, then concerning the relative speed of the wire electrode 12 with respect to the workpiece 14, in the third condition, the relative speed may be set to the same speed as that in the second condition.

In step S32, based on the third condition, the electric discharge induction voltage control unit 34 outputs a command value to the electric discharge induction circuit 20. In the cycle defined in the third condition, the electric discharge induction circuit 20 applies the electric discharge induction voltage of the third condition in the inter-electrode gap. Further, the machining current control unit 36 outputs a command value based on the third condition to the main electric discharge circuit 22. The main electric discharge circuit 22 supplies the machining current of the third condition to the wire electrode 12. Further, the servo controller 38 outputs a command value based on the third condition to the servo amplifier 24. Based on the command value, the servo amplifier 24 supplies the driving electrical power to the servo motor 16. Consequently, the wire electrode 12 moves with respect to the workpiece 14 at the relative speed of the third condition. Thereafter, the approach process is brought to an end. After the approach process is completed, the workpiece 14 is subjected to electrical discharge machining in accordance with the machining program. Even after the approach process is completed, the process of step S32 is continuously executed until the machining condition is changed.

### [Operations and Effects]

In the case that the wire electrode 12 is currently passing through the machining groove 48, even if an electric discharge has occurred in the inter-electrode gap, the electric discharge occurs sporadically and the electric discharge is not generated consecutively. On the other hand, in the case that the wire electrode 12 has come into close proximity to the machining end surface 40, the electric discharge occurs consecutively.

In the wire electrical discharge machine 10 according to the present embodiment, in the case it is determined that an electric discharge has not occurred in the inter-electrode gap within the unit time period, the counting unit 30 resets the number of determinations. The machining condition setting unit 32 switches the machining condition from the first condition to the second condition, in the case it is continuously determined that an electric discharge has occurred in the inter-electrode gap within the unit time period, and the number of determinations has reached a predetermined number of times. Consequently, the timing at which the machining condition is switched from the first condition to the second condition can be set to a point in time at which the wire electrode 12 has come into close proximity to the machining end surface 40. Therefore, the time period required until the wire electrode 12 reaches the machining end surface 40 can be shortened, and the machining time period can also be shortened.

### [Third Embodiment]

The configuration of the wire electrical discharge machine 10 according to the third embodiment is the same as that of the wire electrical discharge machine 10 according to the first embodiment. However, the contents of the approach process performed in the control device 26 according to the third embodiment differ partially from the contents of the approach process according to the first embodiment.

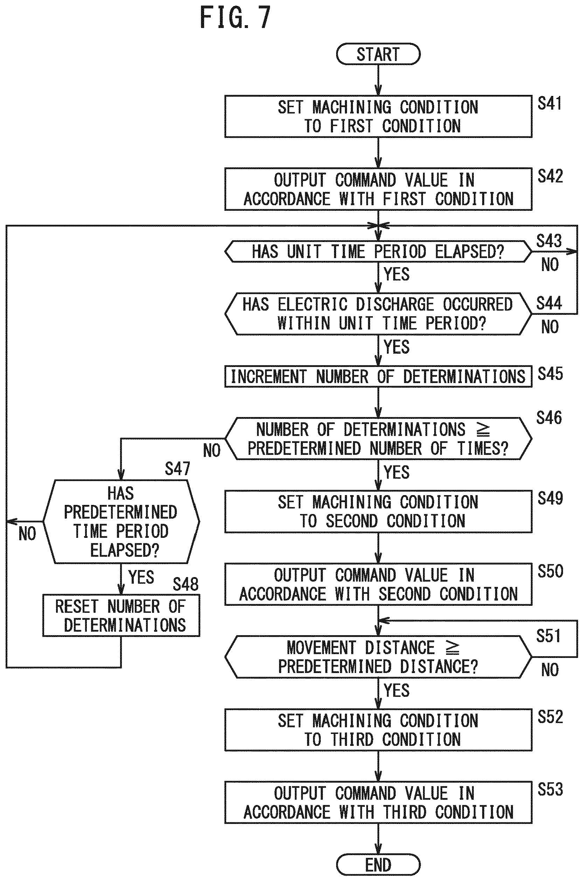

FIG. 7 is a flowchart showing a process flow of an approach process performed in the control device 26. The approach process is executed each time that the wire electrode 12 approaches the machining end surface 40 of the workpiece 14.

In step S41, the machining condition setting unit 32 sets the machining condition to a first condition. Thereafter, the process transitions to step S42. The first condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

In step S42, based on the first condition, the electric discharge induction voltage control unit 34 outputs a command value to the electric discharge induction circuit 20. In the cycle defined in the first condition, the electric discharge induction circuit 20 applies the electric discharge induction voltage of the first condition in the inter-electrode gap. Further, the machining current control unit 36 outputs a command value based on the first condition to the main electric discharge circuit 22. The main electric discharge circuit 22 supplies the machining current of the first condition to the wire electrode 12. Further, the servo controller 38 outputs a command value based on the first condition to the servo amplifier 24. Based on the command value, the servo amplifier 24 supplies the driving electrical power to the servo motor 16. Consequently, the wire electrode 12 moves with respect to the workpiece 14 at the relative speed of the first condition. Thereafter, the process transitions to step S43. The process of step S42 is continuously executed until the process of step S50, which will be described later, is carried out.

In step S43, the electric discharge determination unit 28 determines whether or not the unit time period has elapsed. In the case that the unit time period has elapsed, the process transitions to step S44, whereas in the case that the unit time period has not elapsed, the process of step S43 is repeated. The determination as to whether or not the unit time period has elapsed is carried out on the basis of the elapsed time period, taking as a reference point whichever one is later of the point in time when the approach process was started, and the point in time when it was previously determined that the unit time period had elapsed in step S43.

In step S44, the electric discharge determination unit 28 determines whether or not an electric discharge has occurred in the inter-electrode gap within the unit time period. In the case that the electric discharge has occurred, the process transitions to step S45, whereas in the case that the electric discharge is not occurring, the process returns to step S43. Whether or not the electric discharge has occurred in the inter-electrode gap within the unit time period can be determined, for example, on the basis of an average value of the inter-electrode voltage within the unit time period. In the case that the average value of the inter-electrode voltage within the unit time period is less than or equal to a predetermined voltage, a determination is made that the electric discharge has occurred in the inter-electrode gap within the unit time period.

In step S45, the counting unit 30 increments the number of times (hereinafter, referred to as the number of determinations) that it is determined that the electric discharge has occurred in the inter-electrode gap within the unit time period. Thereafter, the process transitions to step S46. The number of determinations is counted as one time, regardless of whether the number of times that the electric discharge has occurred in the inter-electrode gap within the unit time period is one time or a plurality of times.

In step S46, the machining condition setting unit 32 determines whether or not the number of determinations is greater than or equal to a predetermined number of times. In the case that the number of determinations is greater than or equal to the predetermined number of times, the process transitions to step S49, whereas in the case that the number of determinations is less than the predetermined number of times, the process transitions to step S47.

In step S47, the counting unit 30 determines whether or not a predetermined time period has elapsed. In the case that the predetermined time period has elapsed, the process transitions to step S48, whereas in the case that the predetermined time period has not elapsed, the process returns to step S43. The predetermined time period is set to be longer than the unit time period. The determination as to whether or not the predetermined time period has elapsed is carried out on the basis of the elapsed time period, taking as a reference point whichever one is later of the point in time when the approach process was started, and the point in time when it was previously determined that the predetermined time period had elapsed in step S47.

In step S48, the counting unit 30 resets the number of determinations. Thereafter, the process returns to step S43.

In step S49, the machining condition setting unit 32 sets the machining condition to a second condition. Thereafter, the process transitions to step S50. The second condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

Concerning the relative speed of the wire electrode 12 with respect to the workpiece 14, in the second condition, the relative speed is set to a speed that is slower than that in the first condition. Concerning the machining current supplied to the wire electrode 12, in the second condition, the machining current may be the same as that in the first condition, or in the second condition, the machining current may be different from that in the first condition. Concerning the electric discharge induction voltage applied in the inter-electrode gap, in the second condition, the electric discharge induction voltage may be the same as that in the first condition, or in the second condition, the electric discharge induction voltage may be different from that in the first condition. Concerning the cycle in which the electric discharge induction voltage is applied, in the second condition, the cycle may be the same as that in the first condition, or in the second condition, the cycle may be different from that in the first condition.

In step S50, based on the second condition, the electric discharge induction voltage control unit 34 outputs a command value to the electric discharge induction circuit 20. In the cycle defined in the second condition, the electric discharge induction circuit 20 applies the electric discharge induction voltage of the second condition in the inter-electrode gap. Further, the machining current control unit 36 outputs a command value based on the second condition to the main electric discharge circuit 22. The main electric discharge circuit 22 supplies the machining current of the second condition to the wire electrode 12. Further, the servo controller 38 outputs a command value based on the second condition to the servo amplifier 24. Based on the command value, the servo amplifier 24 supplies the driving electrical power to the servo motor 16. Consequently, the wire electrode 12 moves with respect to the workpiece 14 at the relative speed of the second condition. Thereafter, the process transitions to step S51. The process of step S50 is continuously executed until the process of step S53, which will be described later, is carried out.

In step S51, the machining condition setting unit 32 determines whether or not the movement distance of the wire electrode 12 with respect to the workpiece 14 is greater than or equal to a predetermined distance. The movement distance of the wire electrode 12 is measured with the position of the wire electrode 12 at the point in time when the machining condition is switched from the first condition to the second condition in step S50 being treated as a reference point. In the case that the movement distance of the wire electrode 12 is greater than or equal to the predetermined distance, the process transitions to step S52, whereas in the case that the movement distance of the wire electrode 12 is less than the predetermined distance, the process of step S51 is repeated.

In step S52, the machining condition setting unit 32 sets the machining condition to a third condition. Thereafter, the process transitions to step S53. The third condition is a machining condition concerning each of the electric discharge induction voltage applied in the inter-electrode gap, the cycle in which the electric discharge induction voltage is applied, the machining current supplied to the wire electrode 12, and the relative speed of the wire electrode 12 with respect to the workpiece 14.

Concerning the relative speed of the wire electrode 12 with respect to the workpiece 14, in the third condition, the relative speed is set to a speed that is faster than that in the second condition. Furthermore, concerning the machining current supplied to the wire electrode 12, in the third condition, the machining current is set to a current that is greater than that in the second condition. Concerning the electric discharge induction voltage applied in the inter-electrode gap, in the third condition, the electric discharge induction voltage may be the same as that in the second condition, or in the third condition, the electric discharge induction voltage may be different from that in the second condition. Concerning the cycle in which the electric discharge induction voltage is applied, in the third condition, the cycle may be the same as that in the second condition, or in the third condition, the cycle may be different from that in the second condition.

Concerning the relative speed of the wire electrode 12 with respect to the workpiece 14, in the case that the third condition is set to a faster speed than in the second condition, then concerning the machining current supplied to the wire electrode 12, in the third condition, the machining current may be set to a current of the same magnitude as that in the second condition. Concerning the machining current supplied to the wire electrode 12, in the case that the third condition is set to a current that is greater than that in the second condition, then concerning the relative speed of the wire electrode 12 with respect to the workpiece 14, in the third condition, the relative speed may be set to the same speed as that in the second condition.

In step S53, based on the third condition, the electric discharge induction voltage control unit 34 outputs a command value to the electric discharge induction circuit 20. In the cycle defined in the third condition, the electric discharge induction circuit 20 applies the electric discharge induction voltage of the third condition in the inter-electrode gap. Further, the machining current control unit 36 outputs a command value based on the third condition to the main electric discharge circuit 22. The main electric discharge circuit 22 supplies the machining current of the third condition to the wire electrode 12. Further, the servo controller 38 outputs a command value based on the third condition to the servo amplifier 24. Based on the command value, the servo amplifier 24 supplies the driving electrical power to the servo motor 16. Consequently, the wire electrode 12 moves with respect to the workpiece 14 at the relative speed of the third condition. Thereafter, the approach process is brought to an end. After the approach process is completed, the workpiece 14 is subjected to electrical discharge machining in accordance with the machining program. Even after the approach process is completed, the process of step S53 is continuously executed until the machining condition is changed.

### [Operations and Effects]

In the case that the wire electrode 12 is currently passing through the machining groove 48, even if an electric discharge has occurred in the inter-electrode gap, the electric discharge occurs sporadically and the electric discharge is not generated consecutively. On the other hand, in the case that the wire electrode 12 has come into close proximity to the machining end surface 40, the electric discharge occurs consecutively.

In the wire electrical discharge machine 10 according to the present embodiment, in the case that the number of determinations does not reach the predetermined number of times even after the predetermined time period has elapsed, the counting unit 30 resets the number of determinations. The machining condition setting unit 32 switches the machining condition from the first condition to the second condition, in the case it is continuously determined that an electric discharge has occurred in the inter-electrode gap within the unit time period, and the number of determinations has reached a predetermined number of times. Consequently, the timing at which the machining condition is switched from the first condition to the second condition can be set to a point in time at which the wire electrode 12 has come into close proximity to the machining end surface 40. Therefore, the time period required until the wire electrode 12 reaches the machining end surface 40 can be shortened, and the machining time period can also be shortened.

### (Inventions that can be Obtained from the Embodiments)

The inventions that are capable of being grasped from the above-described embodiments will be described below.

In the wire electrical discharge machine (10) that performs electrical discharge machining on the workpiece by applying the voltage to the inter-electrode gap between the wire electrode (12) and the workpiece (14) and thereby generating the electric discharge while causing the wire electrode to be moved with respect to the workpiece, the wire electrical discharge machine includes the control unit (36, 38) that controls, in accordance with the machining condition, the relative speed of the wire electrode with respect to the workpiece, and the electric discharge energy generated in the inter-electrode gap, the voltage detection unit (18) that detects the voltage in the inter-electrode gap, the electric discharge determination unit (28) which, in the case that the wire electrode is approaching the machining end surface (40) of the workpiece in order to machine the workpiece, determines, for each unit time period, whether or not the electric discharge has occurred in the inter-electrode gap within the unit time period, based on the detected voltage in the inter-electrode gap, the counting unit (30) that counts the number of times that it is determined that the electric discharge has occurred, and the machining condition setting unit (32) that sets the machining condition to the first condition in the case that the wire electrode is approaching the machining end surface, and sets the machining condition to the second condition that differs from the first condition, in the case that the counted number of times has reached the predetermined number of times.

In the above-described wire electrical discharge machine, in the case that it is determined that the electric discharge has not occurred in the inter-electrode gap within the unit time period, the counting unit may reset the counted number of times.

In the above-described wire electrical discharge machine, in the case that the predetermined time period, which is longer than the unit time period, has elapsed since the start of counting of the number of times that it is determined that the electric discharge has occurred, the counting unit may reset the counted number of times.

In the above-described wire electrical discharge machine, the second condition may be a condition in which the relative speed of the wire electrode with respect to the workpiece is slower than the relative speed in the first condition.

In the above-described wire electrical discharge machine, after having set the machining condition to the second condition, the machining condition setting unit may set the machining condition to the third condition that differs from the second condition, in the case that the movement distance of the wire electrode with respect to the workpiece has reached the predetermined distance.

In the above-described wire electrical discharge machine, the third condition may be at least one of a condition in which the relative speed of the wire electrode with respect to the workpiece is faster than the relative speed in the second condition, or a condition in which the electric discharge energy generated in the inter-electrode gap is higher than the electric discharge energy in the second condition.

In the control method for the wire electrical discharge machine (10) which performs electrical discharge machining on the workpiece (14) by applying a voltage to the inter-electrode gap between the wire electrode (12) and the workpiece and thereby generating an electric discharge while causing the wire electrode to be moved with respect to the workpiece, wherein the wire electrical discharge machine includes the voltage detection unit (18) configured to detect the voltage in the inter-electrode gap, the control method for the wire electrical discharge machine includes the first machining condition setting step of setting the machining condition to the first condition in the case that the wire electrode is approaching the machining end surface (40) of the workpiece in order to machine the workpiece, the first control step of controlling, in accordance with the first condition, the relative speed of the wire electrode with respect to the workpiece, and the electric discharge energy generated in the inter-electrode gap, the electric discharge determination step of determining, in the case that the wire electrode is approaching the machining end surface, for each unit time period, whether or not the electric discharge has occurred in the inter-electrode gap within the unit time period, based on the detected voltage in the inter-electrode gap, the counting step of counting the number of times that it is determined that the electric discharge has occurred, the second machining condition setting step of setting the machining condition to the second condition that differs from the first condition, in the case that the counted number of times has reached the predetermined number of times, and the second control step of controlling, in accordance with the second condition, the relative speed of the wire electrode with respect to the workpiece, and the electric discharge energy generated in the inter-electrode gap.

In the above-described control method for the wire electrical discharge machine, in the counting step, in the case that it is determined that the electric discharge has not occurred in the inter-electrode gap within the unit time period, the counted number of times may be reset.

In the above-described control method for the wire electrical discharge machine, in the counting step, in the case that the predetermined time period, which is longer than the unit time period, has elapsed since the start of counting of the number of times that it is determined that the electric discharge has occurred, the counted number of times may be reset.

In the above-described control method for the wire electrical discharge machine, the second condition may be a condition in which the relative speed of the wire electrode with respect to the workpiece is slower than the relative speed in the first condition.

In the above-described control method for the wire electrical discharge machine, there may further be provided the third machining condition setting step which, after having set the machining condition to the second condition, sets the machining condition to the third condition that differs from the second condition, in the case that the movement distance of the wire electrode with respect to the workpiece has reached the predetermined distance.

In the above-described control method for the wire electrical discharge machine, the third condition may be at least one of a condition in which the relative speed of the wire electrode with respect to the workpiece is faster than the relative speed in the second condition, or a condition in which the electric discharge energy generated in the inter-electrode gap is higher than the electric discharge energy in the second condition.

## Claims

1. A wire electrical discharge machine (10) configured to perform electrical discharge machining on a workpiece (14) by applying a voltage to an inter-electrode gap between a wire electrode (12) and the workpiece and thereby generating an electric discharge while causing the wire electrode to be moved with respect to the workpiece, the wire electrical discharge machine comprising:
a control unit (36, 38) configured to control, in accordance with a machining condition, a relative speed of the wire electrode with respect to the workpiece, and an electric discharge energy generated in the inter-electrode gap;
a voltage detection unit (18) configured to detect a voltage in the inter-electrode gap;
an electric discharge determination unit (28) configured to, in a case that the wire electrode is approaching a machining end surface (40) of the workpiece in order to machine the workpiece, determine, for each unit time period, whether or not the electric discharge has occurred in the inter-electrode gap within the unit time period, based on the voltage in the inter-electrode gap that has been detected;
a counting unit (30) configured to count a number of times that it is determined that the electric discharge has occurred; and
a machining condition setting unit (32) configured to set the machining condition to a first condition in the case that the wire electrode is approaching the machining end surface, and to set the machining condition to a second condition that differs from the first condition, in a case that the counted number of times has reached a predetermined number of times.

2. The wire electrical discharge machine according to claim 1, wherein, in a case that it is determined that the electric discharge has not occurred in the inter-electrode gap within the unit time period, the counting unit resets the counted number of times.

3. The wire electrical discharge machine according to claim 1 or 2, wherein, in a case that a predetermined time period, which is longer than the unit time period, has elapsed since start of counting of the number of times that it is determined that the electric discharge has occurred, the counting unit resets the counted number of times.

4. The wire electrical discharge machine according to any one of claims 1 to 3, wherein the second condition is a condition in which the relative speed of the wire electrode with respect to the workpiece is slower than the relative speed in the first condition.

5. The wire electrical discharge machine according to any one of claims 1 to 4, wherein, after having set the machining condition to the second condition, the machining condition setting unit sets the machining condition to a third condition that differs from the second condition, in a case that a movement distance of the wire electrode with respect to the workpiece has reached a predetermined distance.

6. The wire electrical discharge machine according to claim 5, wherein the third condition is at least one of a condition in which the relative speed of the wire electrode with respect to the workpiece is faster than the relative speed in the second condition, or a condition in which the electric discharge energy generated in the inter-electrode gap is higher than the electric discharge energy in the second condition.

7. A control method for a wire electrical discharge machine (10) configured to perform electrical discharge machining on a workpiece (14) by applying a voltage to an inter-electrode gap between a wire electrode (12) and the workpiece and thereby generating an electric discharge while causing the wire electrode to be moved with respect to the workpiece,
wherein the wire electrical discharge machine comprises a voltage detection unit (18) configured to detect a voltage in the inter-electrode gap,
the control method for the wire electrical discharge machine comprising:
a first machining condition setting step of setting a machining condition to a first condition in a case that the wire electrode is approaching a machining end surface (40) of the workpiece in order to machine the workpiece;
a first control step of controlling, in accordance with the first condition, a relative speed of the wire electrode with respect to the workpiece, and an electric discharge energy generated in the inter-electrode gap;
an electric discharge determination step of, in the case that the wire electrode is approaching the machining end surface, determining, for each unit time period, whether or not the electric discharge has occurred in the inter-electrode gap within the unit time period, based on the voltage in the inter-electrode gap that has been detected;
a counting step of counting a number of times that it is determined that the electric discharge has occurred;
a second machining condition setting step of setting the machining condition to a second condition that differs from the first condition, in a case that the counted number of times has reached a predetermined number of times; and
a second control step of controlling, in accordance with the second condition, the relative speed of the wire electrode with respect to the workpiece, and the electric discharge energy generated in the inter-electrode gap.

8. The control method for the wire electrical discharge machine according to claim 7, wherein, in the counting step, in a case that it is determined that the electric discharge has not occurred in the inter-electrode gap within the unit time period, the counted number of times is reset.

9. The control method for the wire electrical discharge machine according to claim 7 or 8, wherein, in the counting step, in a case that a predetermined time period, which is longer than the unit time period, has elapsed since start of counting of the number of times that it is determined that the electric discharge has occurred, the counted number of times is reset.

10. The control method for the wire electrical discharge machine according to any one of claims 7 to 9, wherein the second condition is a condition in which the relative speed of the wire electrode with respect to the workpiece is slower than the relative speed in the first condition.

11. The control method for the wire electrical discharge machine according to any one of claims 7 to 10, further comprising, after having set the machining condition to the second condition, a third machining condition setting step of setting the machining condition to a third condition that differs from the second condition, in a case that a movement distance of the wire electrode with respect to the workpiece has reached a predetermined distance.

12. The control method for the wire electrical discharge machine according to claim 11, wherein the third condition is at least one of a condition in which the relative speed of the wire electrode with respect to the workpiece is faster than the relative speed in the second condition, or a condition in which the electric discharge energy generated in the inter-electrode gap is higher than the electric discharge energy in the second condition.
